# EUROPÄISCHE PATENTANMELDUNG

(11) **EP 1 645 497 A2**
(43) Veröffentlichungstag der Anmeldung: **12.04.2006**
(21) Anmeldenummer: 05017001.8
(22) Anmeldetag: 04.08.2005
(51) Int. Cl.: B62K 5/00, B62K 27/02, B62K 27/12, B62K 3/00, B62K 17/00, B62K 3/06

(54) **Tragrahmenkonstruktion eines Fahrzeugs**

(30) Priorität: 04.08.2004 DE 102004037921
(71) Anmelder: Abouchaar, Nicolas, 96484 Meeder (DE)
(72) Erfinder: Abouchaar, Nicolas, 96484 Meeder (DE)

(57) **Zusammenfassung**

Fahrzeug, bestehend im wesentlichen aus einer Rahmenkonstruktion, Rädern (1), einer Antriebseinleitung, einem Sitz (8) und einer Lenkrichtungseinleitung, bei der die Rahmenkonstruktion durch ihren Verlauf und ihre Eigenschaften
- vordere und hintere Räder (1) im wesentlichen oberhalb oder seitlich des Fahrers oder Passagiers verbindet,
- auf die Tragrahmenkonstruktion wirkende Kräfte durch flexible Elemente (z.B. Seile) aufnimmt,
- federnd den Fahrkomfort des Fahrers unterstützt,
- dem Fahrer/Passagier Schutz vor Witterungseinflüssen bieten kann,
- variabel einsetzbar ist.

Dies wird erreicht durch eine Rahmenkonstruktion, die im wesentlichen oberhalb und/oder seitlich des Fahrers bzw. Passagiers verläuft, welche die vorderen und hinteren Räder (1) mechanisch verbindet, die auftretende Kräfte zumindest teilweise in, die Rahmenkonstruktion verbindende Seile weiterleitet und die durch ihre Flexibilität im Material bzw. entsprechende Gelenkelemente das Fahrzeug lenkbar gestaltet.

## Beschreibung

Die Erfindung betrifft ein Fahrzeug mit einer neuen Ausgestaltung seiner Rahmenkonstruktion und damit verbundenen Möglichkeiten einer Antriebs- und Lenkbewegungseinleitung.

Bekannt sind aus dem Stand der Technik Fahrzeuge, insbesondere Fahrräder, Dreiräder und vier Räder besitzende Fahrzeuge, jeweils mit oder ohne Antrieb, deren Rahmenkonstruktion sich im wesentlichen in einer direkten Verbindung zwischen den die Räder lagernden Achsen befindet. Diese vorbekannten Rahmenkonstruktionen zeichnen sich durch relativ starre Materialien aus.

Bekannt sind auch Fahrzeuge, in denen vordere und hintere Räder - verbunden durch miteinander drehbeweglich verbundene Rahmenteile - so zueinander verdreht werden können, dass eine Fahrtrichtungsänderung des Fahrzeugs ermöglicht wird.

Weiterhin sind Fahrzeuge bekannt, in denen Teile der Rahmenkonstruktion durch ihre Relativbewegung zueinander eine Federung des Fahrers bzw. Passagiers oder von zu transportierenden Lasten ermöglichen. Diese Federungs- und Dämpfungselemente sind jedoch aufwendig in ihrer Herstellung.

Aus der Gebrauchsmusterschrift DE 299 08 161 U1 ist ein Fahrzeug bekannt, bei dem eine herkömmliche, die vorderen und hinteren Räder des Fahrzeugs auf direktem Wege verbindende Rahmenkonstruktion durch eine im wesentlichen oberhalb des Fahrers verlaufende Rahmenkonstruktion ersetzt wird. Diese Rahmenkonstruktion übernimmt alle auf das Fahrzeug einwirkenden Kräfte. Nachteil dieser Rahmenkonstruktion ist ein ungünstiger Kräfteverlauf innerhalb des Tragrohres und erfordert daher nicht unerhebliche Querschnitte um diese Kräfte abfangen zu können.

Aus der Gebrauchsmusterschrift DE 203 13 987 U1 ist ebenfalls ein Fahrzeug bekannt, in dem die Tragrahmenkonstruktion zumindest teilweise seitlich an dem Fahrer vorbeigeführt wird. Wesentliche Elemente der Tragrahmenkonstruktion werden jedoch in herkommlicher Weise in nahezu direkter Verbindung zwischen vorderen und hinteren Rädern geführt. Der durch diesen Rahmenverlauf erzielte Aufprallschutz wird durch eine entsprechende Starrheit der Rahmenkonstruktion, insbesondere wenn sie ohne spezielle Feder- und Dämpfungselemente ausgeführt ist, erkauft.

Aufgabe der Erfindung ist es daher, ein Fahrzeug zu schaffen, dessen Rahmenkonstruktion eine gute Federung des Gesamtsystems zulässt, wobei die Rahmenkonstruktion sehr einfach gestaltet sein soll, dass es im Falle der Nichtbenutzung leicht demontierbar bzw. faltbar ist und dass es einem Fahrer bzw. einem Passagier zusätzlichen Schutz vor Witterungseinflüssen gibt, Dabei soll das Fahrzeug durch seinen einfachen Aufbau kostengünstig in der Herstellung sein und durch einfache Umbauten in seiner Einsetzbarkeit variabel sein.

Erfindungsgemäß wird diese Aufgabe durch die Merkmale der unabhängigen Patentansprüche 1, und 3 gelöst.

Nachfolgend wird die Erfindung an Ausführungsbeispielen näher erläutert:
In den Zeichnungen zeigen
Fig. 1 ein vierrädriges Fahrzeug gemäß der ersten Ausführungsform der Erfindung.
Fig. 2A ein vierrädriges Fahrzeug gemäß der zweiten Ausführungsform der Erfindung.
Fig. 2B ein weiteres vierrädriges Fahrzeug gemäß der zweiten Ausführungsform der Erfindung.
Fig. 3A ein vierrädriges Fahrzeug gemäß der dritten Ausführungsform der Erfindung.
Fig. 3B den Bewegungsmechanismus zwischen dem vorderen und dem hinteren
   Zusammenbauten bei dem in Fig. 3A dargestellten Fahrzeugs.
Fig. 4 zeigt ein dreirädriges Fahrzeug gemäß der vierten Ausführungsform der Erfindung.
Fig. 5A ein vierrädriges Fahrzeug gemäß der fünften Ausführungsform der Erfindung.
Fig. 5B den Bewegungsmechanismus bei den vorderen Rädern des in Fig. 5 dargestellten Fahrzeugs.
Fig. 6 ein vierrädriges Fahrzeug gemäß der sechsten Ausführungsform der Erfindung.
Fig. 7 ein dreirädriges Fahrzeug gemäß der siebten Ausführungsform der Erfindung.
Fig. 8A einen zweirädrigen Anhänger gemäß der achten Ausführungsform der Erfindung.
Fig. 8B eine Seitenansicht des in Fig. 8 dargestellten Anhängers.
Fig. 8C einen weiteren zweirädrigen Anhänger gemäß der achten Ausführungsform der Erfindung.
Fig. 8D einen weiteren zweirädrigen Anhänger gemäß der achten Ausführungsform der Erfindung.

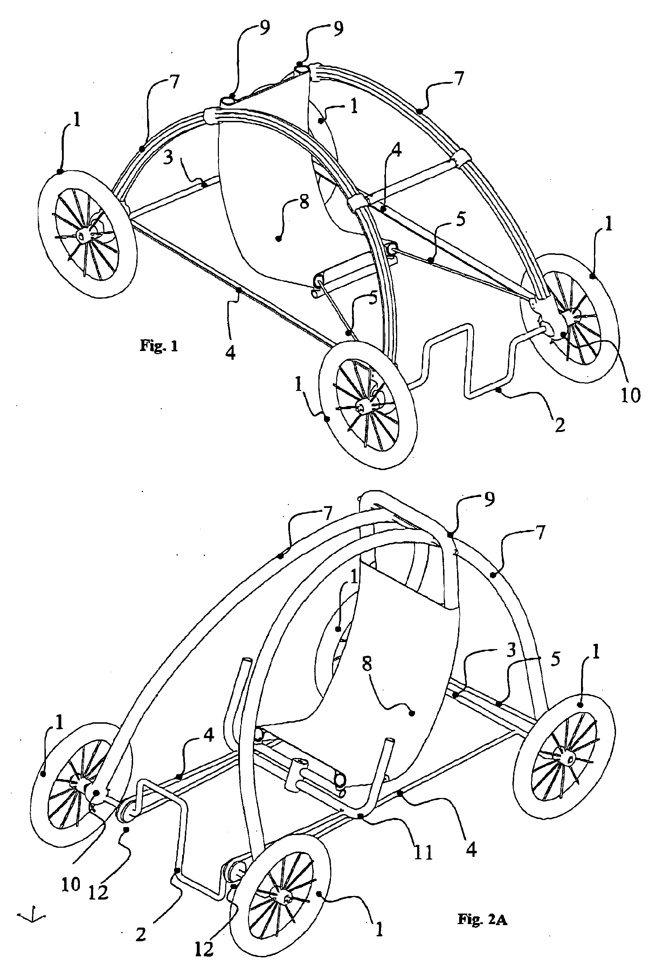

Bei einer ersten Ausführungsform (Fig. 1), handelt es sich um ein vierrädriges Fahrzeug.
Das Fahrzeug besteht aus den vier Rädern (1), einer hoch flexiblen Tragrahmenkonstruktion, einer Kurbelwelle (2) zur Lagerung und zum Antrieb der vorderen Räder (1), einer hinteren horizontalen Achse (3) zur Lagerung der hinteren Räder (1), zwei Aufnahmen (10) zur Lagerung der Kurbelwelle (2) in der Tragrahmenkonstruktion, zwei Aufnahmen (10) zur Lagerung der hinteren horizontalen Achse (3) in der Tragrahmenkonstruktion, einem Sitz (8), zwei Seilen (5) zum Verbinden der unteren Enden des Sitzes (8) mit der Tragrahmenkonstruktion, und zwei weitere Seile (4) zum Lenken und zum Übertragen der auf die Tragrahmenkonstruktion wirkenden Zugkräfte.
Die hoch flexible Tragrahmenkonstruktion besteht aus zwei elastischen Tragrohren (7), die im wesentlichen in Fahrtrichtung verlaufen. Die Ebenen, in denen die Tragrohre (7) verlaufen, schließen einen Winkel von etwa zwischen 20° und 50°, vorzugsweise 35° zwischen einander ein. Die jeweiligen Aufnahmen (10) zur Lagerung der Kurbelwelle (2) bzw. der hinteren horizontalen Achse (3) sind mit Kugelköpfen ausgestaltet, die dazu dienen alle möglichen Positionen der Kurbelwelle (2) relativ zur hinteren horizontalen Achse (3) zu ermöglichen.
Die Kurbelwelle (2), welche mit wenigstens einem der zwei vorderen Räder (1) drehfest verbunden ist, dient zur Fortbewegung des Fahrzeugs.
Die Tragrohre (7) sind aus elastischem Material hergestellt wie zum Beispiel elastischem Holz oder extrudiertem, elastischem Kunststoff oder anderen Materialien, die Glasfasem oder Kohlefasem beinhalten können. Außerdem kommen Metalle als geeignetes Material in Frage.
Der Sitz (8) besteht aus einem zweiarmigen, in seinem Querschnitt z.B. rund ausgebildeten Tragrohr zwischen dessen in einem gewissen Bereich nahezu parallel verlaufenden Armen ein Stoffbezug aufgezogen wird. Alternativ zu einem Stoffbezug sind auch Bezüge aus anderen Materialien, wie z.B. geflochtene Weidenstangen oder gespritzte bzw. geblasene Kunststoffsitzflächen denkbar.

Der Sitz (8) kann jedoch auch als eine im wesentlichen komplett aus Kunststoff oder Holz bestehenden Sitzschale ausgebildet sein. Außerdem ist es denkbar, dass der Sitz (8) nur durch eine Verspannung von Seilen zwischen den jeweiligen Tragrohren (7) der Tragrahmenkonstruktion und drüber gespanntem Stoff besteht.
Das Sitztragrohr (9) bzw. die Sitzschale wird an der Tragrahmenkonstruktion aufgehängt bzw. mechanisch befestigt.
Die Bildung eines im wesentlichen fixen Abstandes zwischen dem Sitz (8) und der Kurbelwelle (2) erfolgt mittels einer drehbaren Lagerung des Sitztragrohrs (9) bzw. der Sitzschale, die eine um eine horizontale und quer zur Fahrtrichtung stehende, an der Tragrahmenkonstruktion befestigte Achse aufweist. Die Sicherung des Sitztragrohrs (9) bzw. der Sitzschale in einer bestimmten Drehlage wird mittels wenigstens zwei Seile gewährleistet, die sich zwischen dem Sitztragrohr (9) und dem Tragrohr der Tragrahmenkonstruktion erstrecken. Hierbei ziehen wenigstens ein Seil (5) den Sitz (8) nach vorne. Andere Seile können auch den Sitz nach hinten ziehen.
Die Wölbung der jeweiligen Tragrohre, der Radstand des Fahrzeugs und die Richtungsänderung des Fahrzeugs sind durch zwei weitere Seile (4) bestimmt, die im wesentlichen in Fahrtrichtung verlaufen und mit ihren jeweiligen Enden an den Enden der jeweiligen flexiblen Tragrohre (7) der Tragrahmenkonstruktion befestigt sind und diese daher miteinander verbinden.
Die Richtungsänderung erfolgt dadurch, dass der Fahrer bzw, ein etwaiger Passagier eines der die Tragrohre (7) verbindenden Seile (4) mit der Hand betätigt, indem er es in Richtung seines Oberkörpers zieht oder allgemein in eine Richtung drückt, die im wesentlichen quer zur Fahrtrichtung ausgerichtet ist. Hierdurch wird der Abstand, der zu diesem Tragrohr gehörenden jeweiligen linken bzw. jeweiligen rechten Räder (1) verkürzt, und erhalten die Achsen der vorderen und hinteren Räder einen Winkel zueinander, der eine Kurvenfahrt ermöglicht.

Ein nichtdargestellte Variante dieser Ausführungsform besteht darin, dass entweder die zwei vorderen und/oder die zwei hinteren Räder (1) jeweils durch ein einziges in der Mitte des Fahrzeugs befindliches Rad ersetzt werden.

Bei der zweiten Ausführungsform (Fig. 2A), handelt es sich ebenfalls um ein vierrädriges Fahrzeug, das dem der ersten Ausführungsform sehr ähnlich ist. Der Unterschied zwischen den beiden Fahrzeugen ist darin zu sehen, dass eine Lenkvorrichtung (11) am Sitz (8) drehbeweglich gelagert ist, wobei zwei Seile (4), die an den jeweiligen Ende der Lenkvorrichtung (11) befestigt sind, die Funktion der Radabstandbestimmung zwischen vorderem und hinterem Rad (1) übernehmen und gleichzeitig zur Richtungsänderung des Fahrzeugs verwendet werden. Dafür erstrecken sich die Seile (4) jeweils zwischen der hinteren horizontalen Achse (3) und der Lenkvorrichtung (11) derart, dass sie über die vordere Kurbelwelle (2), mittels z.B. einer Rolle (12), drehfrei gewickelt sind. Dieser Seilverlauf dient auch dazu, den Sitz (8) gegenüber der Kurbelwelle (2) nach vorne zu ziehen, wobei nur noch ein etwaiges weiteres Kabel nötig wäre, um den Sitz (8) nach hinten zu ziehen.
Um eine Richtungsänderung des Fahrzeugs herbeizuführen, wird durch Drehbewegung der Lenkvorrichtung (11) gegenüber der Tragrahmenkonstruktion das Ende des einen Seils (4) gegenüber der Kurbelwelle (2) angezogen und gleichzeitig das Ende des zweiten Seils (4) gegenüber der Kurbelwelle (2) entspannt, so dass die Höhe des Fahrzeugsschwerpunktes bzw. des Punktes an dem der Sitz (8) aufgehängt ist, unverändert bleibt und keine Zusatzkraft diesbezüglich vom Fahrer eingeleitet werden braucht. Weiterhin, ist es von Vorteil das beide Tragrohre (7) bei der parallelen Position der Achsen der vier Räder (1) gespannt sind, so das eine Richtungsänderung einerseits die weitere Spannung eines Rohrs und andererseits die Entspannung des zweiten Rohrs zu folge hat, so dass die Kraft, die in das System an der Lenkvorrichtung (11) eingespeist werden soll, um die Richtungsänderung zu erzeugen, im wesentlichen sehr gering ist und hauptsächlich dazu dient, die Reibungseffekte zu überwinden.

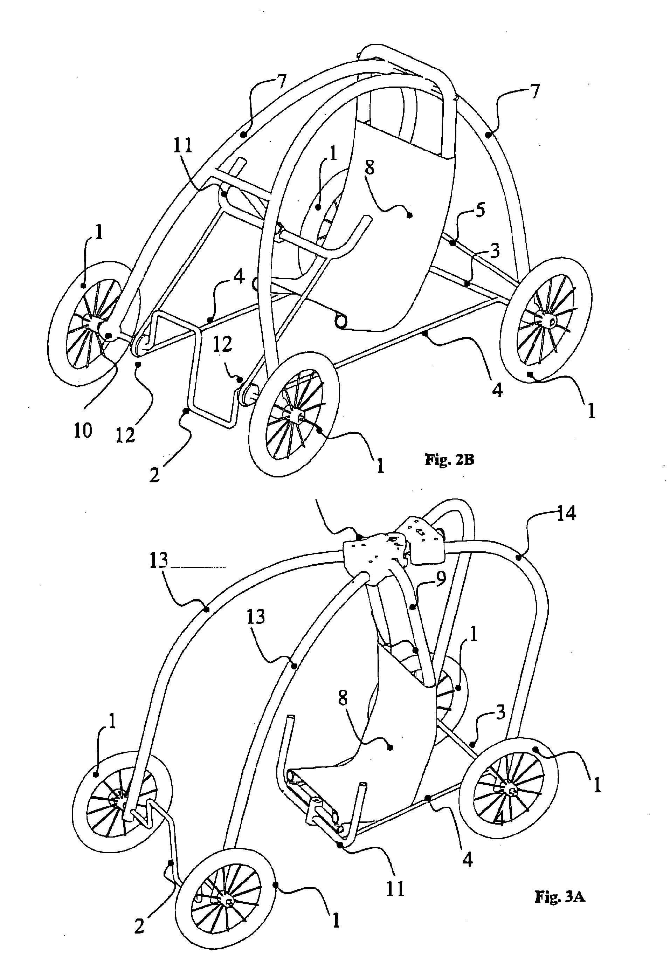

In einer weiteren bevorzugten Variante dieser zweiten Ausführungsform (Fig. 2B), wird die Lenkvorrichtung (11) an der Tragrahmenkonstruktion drehgelagert befestigt und es erfolgt die Richtungsänderung des Fahrzeugs und die Bestimmung des Radabstandes zwischen vorderem und hinterem Rad (1) über 2 Seile (4). Diese Seile (4) sind mit ihrer Enden jeweils an einem Ende der Lenkvorrichtung (11) befestigt, werden drehfrei über die vordere Kurbelwelle (2) geführt und an der hinteren horizontalen Achse (3) befestigt. Die Bestimmung der Sitzlage erfolgt über ein weiteres Kabel (5), kann aber auch über die Seile (4) zur Richtungsänderung des Fahrzeugs bzw. zur Bestimmung des Radabstandes erfolgen.

Bevorzugt sind die jeweiligen der Richtungsänderung dienenden Seile (4) aller genannten Ausführungsformen an den Wellen- bzw. Achsenaufnahmen und nicht den Wellen bzw. Achsen selbst befestigt bzw. umgelenkt, um die Reibungskraft der Wellen in ihren Aufnahmen möglichst niedrig zu halten.

Bei der dritten Ausführungsform (Fig. 3A), ist das Fahrzeug mit vier Rädern (1) ausgerüstet.
Das Fahrzeug besteht aus einem vorderen Zusammenbau und einem hinteren Zusammenbau.

Der vordere Zusammenbau besteht hauptsächlich aus zwei Rädern (1), einer Kurbelwelle (2), welche mit wenigstens einem der zwei vorderen Räder (1) drehfest verbunden ist, zwei Tragrohre (13), welche den jeweiligen vorderen Rädern (1) zugeordnet sind, einem vorderen Gehäuse (15) in dem die jeweiligen oberen Enden der vorderen Tragrohre (13) befestigt sind, einen Sitz (8) und zwei in die unteren Enden der jeweiligen vorderen Tragrohre (13) eingesteckten Aufnahmen (10) zur Lagerung der Kurbelwelle (2).

Der hintere Zusammenbau besteht hauptsächlich aus zwei Rädern (1), einer Achse, welche die zwei hinteren Räder (1) verbindet, zwei Tragrohre (14), welche den jeweiligen hinteren Rädern (1) zugeordnet sind, einem hinteren Gehäuse (16) in dem, die jeweilige obere Enden der hinteren Tragrohre (14) befestigt sind und zwei in die unteren Enden der jeweiligen hinteren Tragrohren (14) eingesteckte Aufnahmen (10) zur Lagerung der hinteren horizontalen Achse (3).

Die Fortbewegung erfolgt durch das Betätigen der Kurbelwelle (2) mit den Füssen des Fahrers bzw. Passagiers.

Als Materialien für die Tragrohre (13, 14) kommen die unter der Ausführungsform 1 genannten in Frage.

Im fahrbereiten Zustand, schließen die zwei vorderen Rohre (13) einen Winkel von etwa zwischen 20° und 50°, vorzugsweise 35° zwischen einander ein. Sie können jeweils um eine im wesentlichen vertikale Achse relativ zum vorderen Gehäuse (15) gedreht werden, so dass sie im zusammengeklappten, nicht fahrbereiten Zustand im wesentlichen parallel verlaufen und unmittelbar nebeneinander stehen. Ebenso, schließen die zwei hinteren Tragrohre (14) im fahrbereiten Zustand einen Winkel von etwa zwischen 50° und 90°, vorzugsweise 70° zwischen einander ein. Sie können auch jeweils um eine im wesentlichen vertikale Achse relativ zum hinteren Gehäuse (16) gedreht werden, so dass sie im zusammengeklappten, nicht fahrbereiten Zustand im wesentlichen parallel zueinander verlaufen und unmittelbar nebeneinander stehen. Die jeweiligen Tragrohre (13, 14) des vorderen und hinteren Zusammenbaus werden jeweils mittels wenigstens eines Befestigungselementes an die jeweiligen Gehäuse (15, 16) befestigt. Dieses Befestigungselement kann als eine Schraube oder ein Schnellverschluss ausgebildet sein und kann auch als Drehachse dienen, um die jeweiligen Tragrohre (13, 14) relativ zum Gehäuse gedreht werden können.
Die vordere Kurbelwelle (2) und die hintere horizontale Achse (3) der Räder (1) sind jeweils an den Tragrohren (13, 14) mittels Aufnahmen (10) gelagert. Diese Aufnahmen (10) können ohne Werkzeug aus den Tragrohren (13, 14) gezogen werden um ein Zusammenklappen der Tragrohre (13, 14) in einem nicht fahrbereiten Zustand zu ermöglichen.
Die vordere Kurbelwelle (2) und die hintere horizontale Achse (3) können auch jeweils wenigstens zweiteilig ausgebildet werden, um das Zusammenklappen des Fahrzeugs ohne ihren Ausbau zu unterstützen.

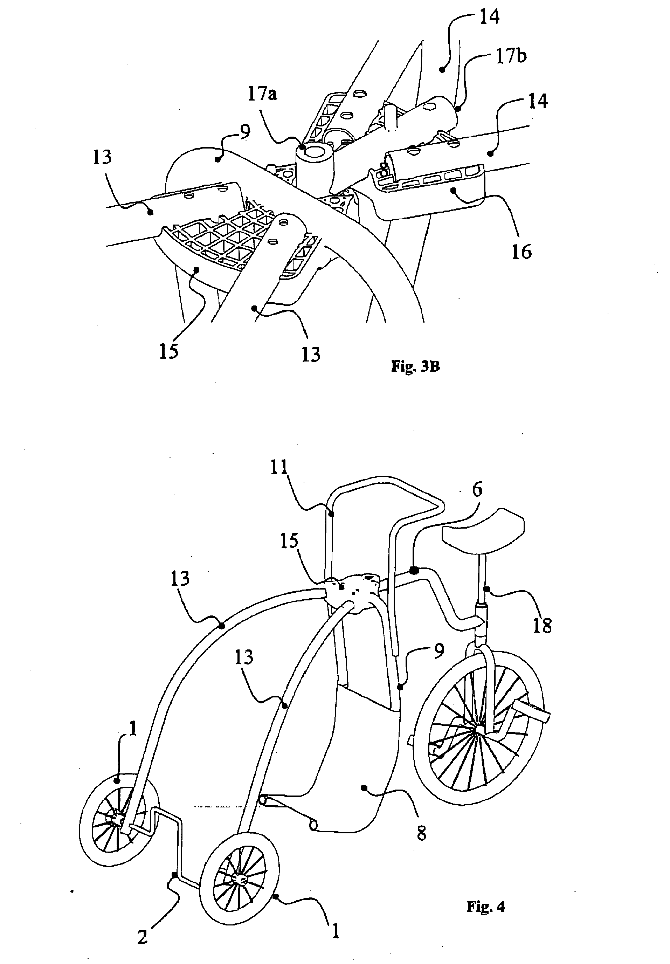

Das vordere und das hintere Gehäuse (15, 16) sind vorzugsweise aus Holz, Kunststoff, oder Metall hergestellt. Expandierter Kunststoff mit einer geringen Dichte, wie EPP (expandiertes Polypropylen) kann auch dafür verwendet werden.
Das vordere und das hintere Gehäuse (15, 16) (siehe Fig. 3B), sind sowohl um eine vertikale Achse (17a) als auch um eine horizontale, in Fahrtrichtung verlaufende Achse (17b) zueinander drehgelagert. Diese doppelte Drehlagerung erfolgt dank eines T-förmigen Rohrzusammenbaus (17), der aus einem vertikalen (17a) und einem horizontalen (17b), mit einander fest verbundenen Rohren besteht. Das vertikale Rohr (17a) des T-förmigen Rohrzusammenbaus (17) wird im vorderen Gehäuse (15) gelagert und das horizontale (17b) Rohr des T-förmigen Rohrzusammenbaus (17) wird im hinteren Gehäuse (16) gelagert.

Die Einstellung des Abstands zwischen Sitz (8) und Kurbelwelle (2) erfolgt durch die Drehung des Sitztragrohrs (9) bezüglich einer horizontalen, rechtwinklig zur Fahrtrichtung ausgerichteten Achse um das vordere Gehäuse (15). Die Sicherung des Sitztragrohrs (9) in einer bestimmten Drehlage erfolgt mittels Stiften, die in verschiedene Löcherpaare im Sitztragrohr (9) und im vorderen Gehäuse (15) eingesteckt werden.

Die Fahrtrichtungsänderung des Fahrzeugs erfolgt durch die Drehung des vorderen Zusammenbaus relativ zum hinteren Zusammenbau. Zwei Seile (4), die jeweils zwischen den jeweiligen unteren Enden der hinteren Tragrohre (14) und der Lenkvorrichtung (11) befestigt sind ermöglichen die Winkelstellung der hinteren horizontalen Achse und der vorderen Kurbelwelle (2) zu verändern und eine Fahrtrichtungsänderung einzuleiten. Eine Begrenzung der Lenkbewegung an einem Ende des jeweiligen Seils, an der Lenkvorrichtung (11) oder an der hinteren horizontalen Achse (3) entlang dient dazu, das nichtlineare Verhalten der Lenkung zu kompensieren.

Vorzugsweise läuft die vertikale Achse (17a) durch die hintere horizontale Achse um das nichtlineare Verhalten der Lenkung zu vermeiden.

Die Drehung des vorderen Zusammenbaus relativ zum hinteren Zusammenbau kann auch durch die direkte Ausübung eines Drehmoments, von einem zusätzlichen, nicht dargestellten, in einem weiteren, an dem hinteren Gehäuse (16) befestigten Sitz (8) sitzenden Beifahrer erfolgen.
Die vorderen Tragrohre (13) können aus einem einzigen, entsprechend gebogenen Rohr bestehen. Dasselbe gilt für die hinteren Tragrohre (14).

Bei einer bevorzugten aber nicht dargestellten Variante der dritten Ausführungsform sind die vier Tragrohre (13, 14) an derselben Achse drehbar gelagert. Bei einer solchen Variante entfallen die zwei Gehäuse (15, 16). Dann verfügt der vordere Zusammenbau relativ zum hinteren Zusammenbau über nur eine Drehfreiheit, wobei die zwei Zusammenbauten ausschließlich über eine im wesentlichen vertikale Achse zueinander drehbar gelagert sind. Die Rohre (13, 14) können aus leicht flexiblem Material bestehen um Unebenheiten auszugleichen.

Bei einer vierten Ausführungsform (Fig. 4), ist das Fahrzeug mit drei Rädern (1) ausgerüstet und ist für den Transport von zwei Personen gedacht. Das Fahrzeug besteht in dieser Ausführungsform aus einem vorderen und einem hinteren Zusammenbau. Der vordere Zusammenbau bei dieser Ausführungsform entspricht dem der zweiten, oben beschriebenen Ausführungsform, mit dem Unterschied, dass die Kurbelwelle (2) direkt in den vorderen Tragrohren (13) ohne Aufnahmen gelagert ist.
Die Fortbewegung erfolgt durch das Betätigen der Kurbelwelle (2) und/oder durch das Betätigen der Pedale am hinteren Zusammenbau, wobei der Antrieb des vorderen Passagiers vorzugsweise mit einem Freilauf versehen ist.
Der hintere Zusammenbau besteht aus einem Einrad (18) und einem Verbindungstragrohr (6), das mit beiden, dem Einrad (18) und dem T-förmigen Rohrzusammenbau (17) drehfest verbunden ist. Das Verbindungstragrohr (6) kann auch mit dem T-förmigen Rohrzusammenbau (17) einstückig ausgebildet.
Das Einrad (18) kann durch das Lösen des Verbindungstragrohr (6) auch alleine benutzt werden.

Als Materialien für das Gehäuse (15) bzw. Tragrohre (13) kommen die unter der Ausführungsform 3 genannten in Frage.

Die Drehung des vorderen Zusammenbaus relativ zum hinteren Zusammenbau erfolgt durch ein am Sitztragrohr (9) fest verbundenes Lenkrad, das vom hinteren Passagier gesteuert wird. Bevorzugt verfügt der hintere Passagier über eine Bremse.

Bei einer nicht dargestellten Varianten der vierten Ausführungsform, ist das Fahrzeug mit zwei Rädern (1) ausgerüstet und ist für den Transport von zwei Personen gedacht. Zum Unterschied zur in Fig. 4 dargestellten Ausführungsform, ist der vordere Zusammenbau mit einem einzigen Rad ausgerüstet, und ist das den Sitz (8) oder Sattel tragendes Element (9) als Bestandteil des hinteren Zusammenbaus ausgebildet, so dass eine Einstellung des Abstands zwischen den hinteren und dem vorderen Zusammenbauten eine Einstellung des Abstands zwischen dem einen Sitz (8) oder Sattel tragenden Element (9) und der vordere Kurbelwelle (2).

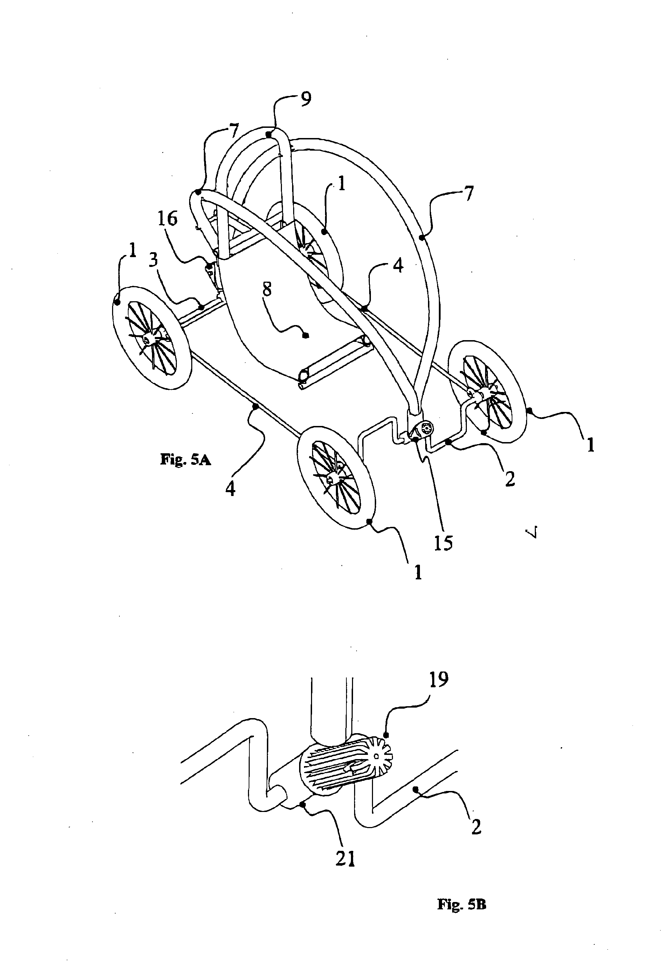

Bei einer fünften Ausführungsform (Fig. 5A), besteht das Fahrzeug aus vier Rädern (1), einer Tragrahmenkonstruktion, einer vorderen Kurbelwelle (2), einer hinteren horizontalen Achse (3), einem vorderen und einem hinteren Gehäuse (16) zur Aufnahme der zwei Tragrohre (7), einer vorderen schrägen Achse (19), einer hinteren schrägen Achse (20), einem Sitz (8) und einem Seil (4).

Die Tragrahmenkonstruktion besteht aus wenigstens einem, vorzugsweise zwei, bezüglich einer vertikalen Fahrtrichtungsebene symmetrischen, projiziert auf eine senkrecht zur Fahrtrichtung stehende Ebene im wesentlichen V-förmigen Tragrohren (7). Die vorderen Enden der jeweiligen Tragrohre werden in einem vorderen Gehäuse (15) aufgenommen bzw. befestigt. Die hinteren Enden der jeweiligen Tragrohre (7) werden in einem hinteren Gehäuse (16) aufgenommen bzw. befestigt.
Das vordere Gehäuse (15) integriert auch eine Lagerung für die vordere schräge Achse (19). Die Lagerung verläuft in der vertikalen Fahrtrichtungsebene und weißt einen Winkel von etwa zwischen 30° und 60°, vorzugsweise 45° mit einer waagerechten Ebene auf. Die vordere Schräge Achse (19) dient zur mittigen Lagerung der vorderen Kurbelwelle (2) und beinhaltet eine horizontale mittige Lagerung (21) zur freien Drehung der Kurbelwelle (2) gegenüber der Tragrahmenkonstruktion (siehe Fig. 5B).
Das hintere Gehäuse (16), die hintere Schräge Achse (20) und die hintere Lagerung sind identisch zu den jeweiligen vorderen und sind zu diesen bezüglich einer senkrechten zur Fahrtrichtung stehenden Ebene spiegelbildlich angeordnet. Die hintere Schräge Achse (20) dient zur mittigen Lagerung der hinteren horizontalen Achse (3) und beinhaltet eine horizontale mittige Lagerung (21) zur freien Drehung der hinteren horizontalen Achse (3) gegenüber der Tragrahmenkonstruktion. Die hintere horizontale Achse (3) dient zur Lagerung der hinteren Räder (1).

Die Kurbelwelle (2), welche mit wenigstens einem der zwei vorderen Räder (1) drehfest verbunden ist, dient zur Fortbewegung des Fahrzeugs.

Als Materialien für die Gehäuse (15, 16) bzw. Tragrohre (7) kommen die unter der Ausführungsform 3 genannten in Frage.

Die Tragrohre sind an ihren unteren Enden mittels des vorderen (15) und des hinteren Gehäuses (16) befestigt. Die Tragrohre (7) werden jeweils mittels wenigstens eines Befestigungselements an das Gehäuse (15, 16) befestigt. Dieses Befestigungselement kann als eine Schraube oder als Schnellverschluss ausgebildet sein und kann auch als Drehachse dienen um die das Tragrohr (7) relativ zum Gehäuse (15, 16) zum Zwecke des Zusammenklappens gedreht werden kann.
Im fahrbereiten Zustand, schließen die Ebenen, in denen die Tragrohre (7) verlaufen, einen Winkel von etwa zwischen 25° und 60°, vorzugsweise 42° zwischen einander ein. Sie können jeweils um eine im wesentlichen horizontale Achse relativ zum Gehäuse (15, 16) gedreht werden, so dass sie beide im zusammengeklappten, nicht fahrbereiten Zustand im wesentlichen parallel verlaufen und unmittelbar nebeneinander bzw. parallel zur vertikalen Fahrtrichtungsebene stehen.

Als Materialien für die Gehäuse (15, 16) bzw. Tragrohre (7) kommen die unter der Ausführungsform 3 genannten in Frage.

Der Sitz (8) kann wie in Ausführungsbeispiel 1 beschrieben ausgestaltet sein.
Die Einhaltung des Abstandes zwischen Sitz (8) und Kurbelwelle (2) erfolgt durch eine Drehung des Sitztragrohrs (9) um eine horizontale, quer zur Fahrtrichtung verlaufende Achse relativ zu der Tragrahmenkonstruktion, wobei die Sicherung des Sitztragrohrs (9) in einer bestimmten Drehlage mittels wenigstens einer Tragstrebe, die hinten dem Sitz (8) zwischen den Sitztragrohr (9) und den Tragrohre (7) der Tragrahmenkonstruktion verläuft, gewährleistet wird.
Die Richtungsänderung des Fahrzeugs erfolgt durch eine Verlagerung des Gewichts des Fahrers und etwaiger Passagiere inklusive der Tragrahmenkonstruktion.
Die Montage bzw. der Zusammenbau des Fahrzeugs erfolgt mittels eines Seils, welches an seinen Enden an den jeweiligen Enden der vorderen Kurbelwelle (2) befestigt und zur hinteren Achse geführt ist. Das Kabel läuft durch zwei, an den jeweiligen hinteren Enden der Tragrohre befestigte Ösen verschiebbar und parallel zur hinteren Achse. Alternativ kann eine Hohlwelle zum Einsatz kommen, in der das Seil geführt wird. Hierzu besitzt die Welle zwei entsprechende Eintrittsöffnungen, die sich in der Nähe der jeweiligen hinteren Enden der Tragrohre befinden. Der Fahrer bzw. ein etwaiger Beifahrer kann an diesen Seilen entsprechend ziehen, um sich in die aufrechte Sitzposition zu begeben.

In einer bevorzugten Variante der fünften Ausführungsform, die nicht dargestellt ist, wird die V-formige Tragrahmenkonstruktion transversal getrennt, so dass sie aus einem vorderen, vorzugsweise V-förmigen Tragrohr und einem hinteren, vorzugsweise V-förmigen Tragrohr besteht. Die mechanische Verbindung der zwei Tragrohre erfolgt vorzugsweise durch das Sitztragrohr. Diese Trennung erleichtert das Zerlegen und Verstauen des Fahrzeugs.

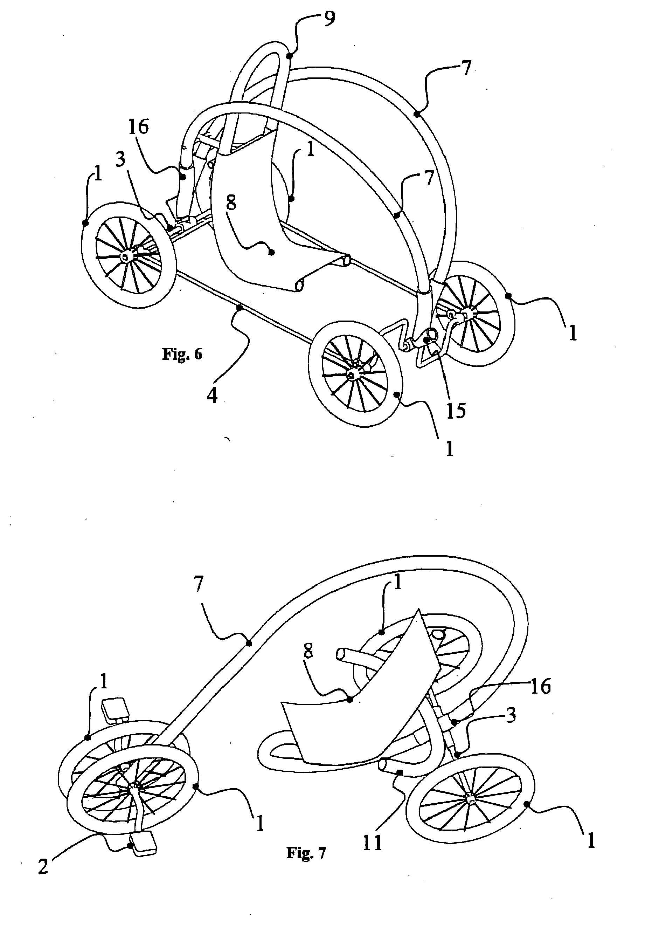

Bei einer sechsten Ausführungsform (Fig. 6), handelt es sich auch um ein vierrädriges Fahrzeug, das dem der fünften Ausführungsform entspricht. Der Hauptunterschied zwischen beiden liegt jedoch darin, dass die Tragrohre (7) elastisch ausgebildet sind, und dass Seil (4) auch zur Bestimmung des Radabstandes dient.

Bei einer siebten Ausführungsform (Fig. 7), besteht das Fahrzeug aus vier Rädern (1), einer Tragrahmenkonstruktion, einer vorderen horizontalen Achse zur Lagerung der vorderen Räder (1), einer hinteren horizontalen Achse (3) zur Lagerung der hinteren Räder (1), und einem hinteren Gehäuse (16).

Die Tragrahmenkonstruktion besteht aus einem mittleren Rohr (7), das in der vertikalen Fahrtrichtungsebene verläuft. Die zwei vorderen Räder (1) sind seitlich am Tragrohr (7) mittels der vorderen Achse drehbar gelagert.

Als Materialien für das Gehäuse (16) bzw. Tragrohr (7) kommen die unter der Ausführungsform 3 genannten in Frage.

Das Sitztragrohr entsteht durch eine Verlängerung des mittigen Tragrohres (7) über die Lagerstelle der hinteren Achse hinaus ohne Zusatzbauteile.
Die Verstellung des Sitzes (8) kann durch ein Zusatztragrohr, das sich teleskopisch relativ zum mittigen Tragrohr (7) verschiebt, erfolgen.
Die Richtungsänderung des Fahrzeugs erfolgt durch eine Verlagerung des Gewichts des Fahrers und etwaiger Passagiere inklusive der Tragrahmenkonstruktion. Das Aufrichten erfolgt mit Hilfe von einer festen Lenkvorrichtung (11), die am hinteren Gehäuse (16) befestigt wird.
Das hintere Gehäuse (16) beinhaltet eine horizontale Lagerung zur Aufnahme der hinteren horizontalen Achse (3), welche die zwei hinteren Räder (1) zusammen verbindet, eine schräge Lagerung, die eine Drehung der Tragrahmenkonstruktion relativ zur hinteren Achse (3) ermöglicht, und eine halbkreisförmige. Lenkvorrichtung (11). Vorzugsweise schließt die schräge Lagerung einen Winkel von etwa 25° bis 45°, vorzugsweise 35° mit der horizontalen Ebene ein.

In Fig. 7A ist eine Variante der siebten Ausführungsform dargestellt. Zum Unterschied zur in Fig. 7 dargestellten Ausführungsform, besteht die Tragrahmenkonstruktion aus einer oberen Tragstrebe (27) und einem unteren Zusammenbau (28), die zueinander unter dem Fahrer drehbeweglich sind, wobei die Achse (29) im Wesentlichen schräg gelagert ist. Die hintere Achse (3) ist Bestandteil des unteren Zusammenbau (28).

In Fig. 7B ist eine weitere Variante der siebten Ausführungsform dargestellt. Zum Unterschied zur in Fig. 7 dargestellten Ausführungsform, verfügt das Fahrzeug um zwei vordere Räder und ein einziges hinteres Rad. Die Änderung der Fahrtrichtung erfolgt dank einer schrägen vorderen Achse (19), wobei die obere Scheibe (32) mit dem Lenkrad drehfest verbunden ist und die untere Scheibe (33) drehfest mit der vorderen Achse (30) verbunden ist, so dass eine Drehung des Lenkrads als eine relative Drehbewegung zwischen der Tragstrebe (7) und der vorderen Achse (30) der vorderen Räder übertragen wird. Die beide Scheiben (32, 33) sind mit einem Keilriemen (31) zueinander verbunden.

In einer weiteren bevorzugten, nicht dargestellten Variante der siebten Ausführungsform ist das Tragrohr aus einem elastischen Material ausgebildet. Ein Seil, befestigt an dem vorderen Ende des Tragrohres und der hinteren Achse oder einem hinteren Punkt des Tragrohres übernimmt die Kräfte, welche die vorderen Räder von den hinteren Rädern beabstanden wollen.

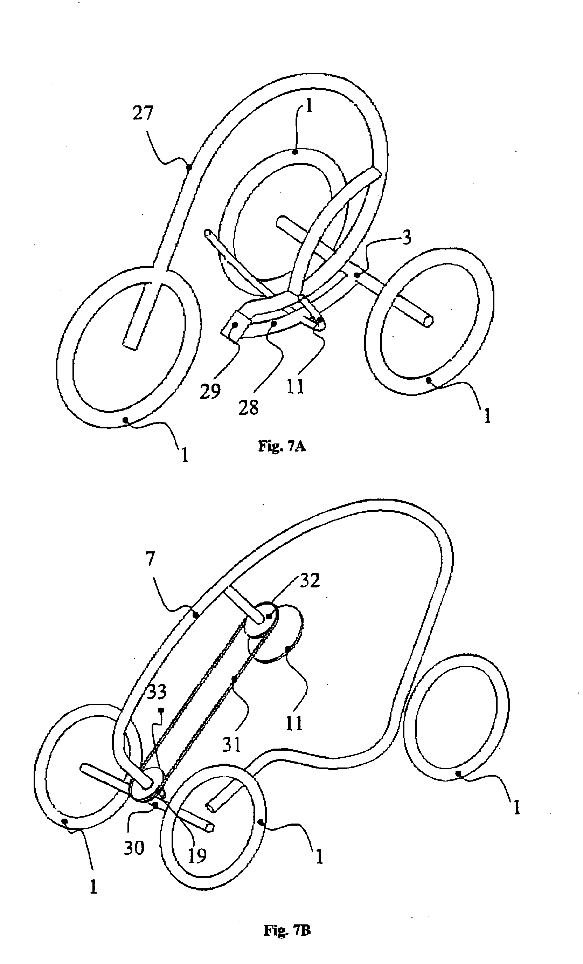

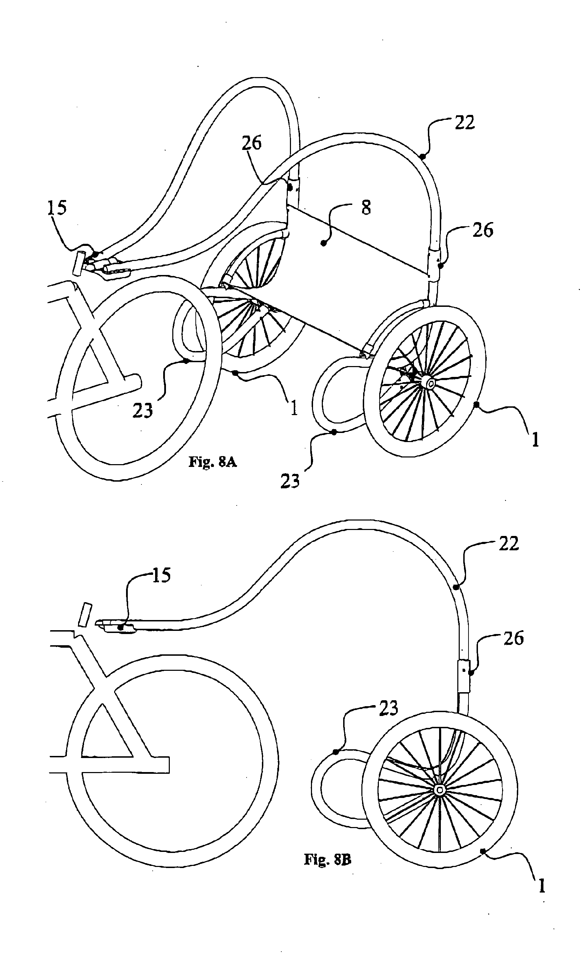

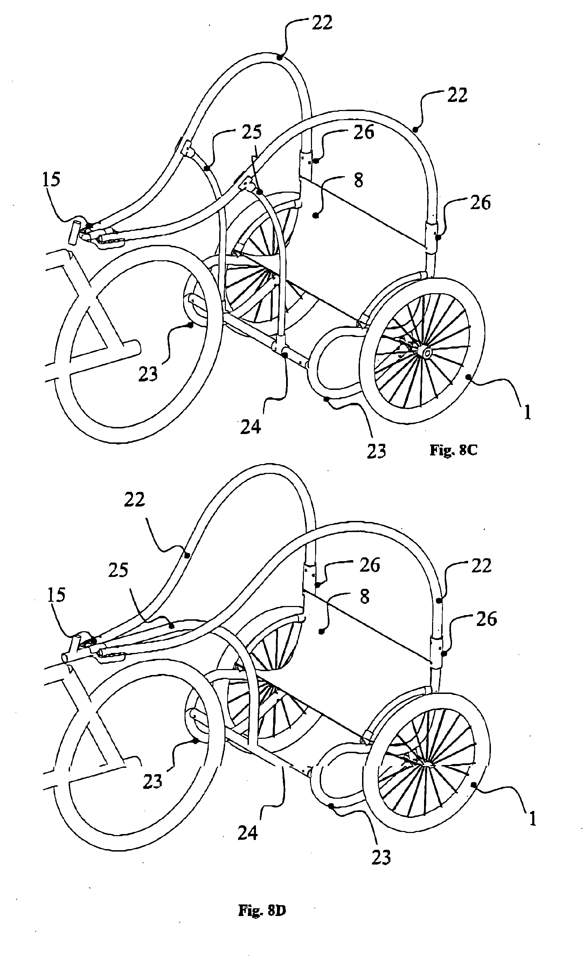

Bei einer achten Ausführungsform (Fig. 8A und 8B), ist das Fahrzeug mit zwei Rädern (1) ausgerüstet und als Anhänger für ein vorausfahrendes zweites Fahrzeug ausgebildet.
Die Tragrahmenkonstruktion besteht hauptsächlich aus vier Tragrohren (22, 23), wobei jeweils ein oberes (22) und eine unteres (23) Tragrohr einem Rad (1) zugeordnet sind.
Die oberen Tragrohre (22) sind an ihren vorderen Enden mittels eines vorderen Gehäuses (15) miteinander befestigt. Im fahrbereiten Zustand, schließen die zwei oberen Tragrohre (22) einen Winkel von etwa zwischen 20° und 40°, vorzugsweise 30° zwischen einander ein.

Sie können jeweils um eine im wesentlichen vertikale Achse relativ zum Gehäuse (15) gedreht werden, so dass sie in einem zusammengeklappten, nicht fahrbereiten Zustand im wesentlichen parallel verlaufen und unmittelbar nebeneinander stehen.
Die oberen Tragrohre (22) werden jeweils mittels wenigstens eines Befestigungselements am vorderen Gehäuse (15) befestigt. Dieses Befestigungselement kann als eine Schraube oder als ein Schnellverschluss ausgebildet sein und kann auch als Drehachse dienen, um die das Tragrohr (22) relativ zum vorderen Gehäuse (15) gedreht werden kann.
Die unteren Tragrohre (23) sind jeweils gegenüber den oberen Tragrohren (22) um eine vertikale Achse (26) drehgelagert. Sowohl im fahrbereiten als auch im gefalteten Zustand verlaufen die zwei unteren Tragrohre (23) in senkrechten, zueinander parallelen Ebenen.

Als Materialien für das Gehäuse (15) bzw. Tragrohre (22, 23) kommen die unter der Ausführungsform 3 genannten in Frage.
Die Sitzfläche besteht aus einem Stoff, der zwischen den jeweiligen unteren Tragrohren (23) gezogen ist.

Der Anhänger kann an einem Fahrrad, vorzugsweise am Sattelrohr, mittels eines Kugellagergelenks befestigt werden.
Die Räder (1) sind jeweils am unteren Ende der jeweiligen unteren Tragrohre (23) mittels Aufnahmen (10) gelagert. Die Lagerung der Räder (1) kann auch durch Löcher in den unteren Tragrohren (23) erfolgen. Die zwei Räder (1) können auch auf einer gemeinsamen Achse gelagert werden.

Die Bestimmung des zur Fahrtrichtung lotrecht verlaufenden Abstandes zwischen den zwei unteren Tragrohren (23) kann von einem Querträger (24) unterstützt werden, der auch als Einsteig- bzw. Aussteighilfe und/oder als Fußstütze für die Passagiere dienen kann.
Die jeweiligen oberen (22) und unteren Tragrohre (23) können auch einteilig ausgebildet werden, so dass die Tragrahmenkonstruktion im wesentlichen aus 2 V-förmigen Tragrohren besteht, wobei die Räder (1) im gefalteten Zustand schräg zueinander stehen.

In einer bevorzugten Variante (Fig. 8C) der achten Ausführungsform, handelt es sich auch um einen zweirädrigen Anhänger. Der Hauptunterschied zu dem in Fig. 8A dargestellten Anhängern liegt darin, dass die unteren Tragrohre (23) mit einem Querträger (24) zusammengebunden sind, der einen parallelen Verlauf der zwei Räder (1) unterstützt. Zwei weitere Streben (25) verbinden den Querträger (24) zu den oberen Tragrohren (22), und unterstützen den Ein- bzw. Ausstieg der Passagiere. Die zwei Streben (25) können auch als Träger für einen Schutzblech dienen.

In einer weiteren bevorzugten Variante (Fig. 8D) der achten Ausführungsform, handelt es sich auch um einen zweirädrigen Anhänger. Der Hauptunterschied zu dem in Fig. 8C dargestellten Anhängern liegt darin, dass eine mittlere Strebe (25) den Querträger (24) zum vorderen Gehäuse (15) verbindet.

In einer bevorzugten, nicht dargestellten Variante der achten Ausführungsform sind die Tragrohre aus einem elastischen Material ausgebildet. Ein oder mehrere Seile, befestigt zwischen dem Lagerpunkt des Anhängers bzw. der hinteren Achse am ziehenden Fahrzeug und dem Querträger (24) bzw. der Achse des Anhängers übernimmt die Kräfte, welche die Räder (1) des Anhängers vom ziehenden Fahrzeug beabstanden wollen.

Alle Ausführungsformen und Varianten können weiterhin dadurch variiert werden, dass die verwendeten Räder (1) so gestaltet werden, dass eine Nutzung des Fahrzeugs auf Wasser möglich ist oder dass die Räder (1) in ihrer Funktion ersetzt werden durch Mittel, die eine Bewegung des Fahrzeugs auf anderen Untergründen ermöglicht (z.B. Skiaufsätze zur Nutzung auf Schnee oder Eis).

### Bezugszeichenliste

Rad (1)
Kurbelwelle (2)
Hintere horizontale Achse (3)
Spannverbindung / Seil (4)
Spannverbindung / Seil (5)
Verbindungstragrohr (6)
Tragrohr (7)
Sitz (8)
Sitz tragendes Element / Sitztragrohr (9)
Aufnahme (10)
Lenkvorrichtung (11)
Rolle (12)
Vorderes Tragrohr (13)
Hinteres Tragrohr (14)
Vorderes Gehäuse (15)
Hinteres Gehäuse (16)
T-förmiger Rohrzusammenbau (17)
Vertikale Achse (17a)
Horizontale Achse (17b)
Einrad (18)
Vordere Schräge Achse (19)
Hintere Schräge Achse (20)
Horizontale mittige Lagerung (21)
Oberes Tragrohr (22)
Unteres Tragrohr (23)
Querträger (24)
Strebe (25)
Vertikale Achse (26)
Tragstrebe (27)
Unterer Zusammenbau (28)
Mittlere schräge Achse (29)
Keilriemen (31)
Obere Scheibe (32)
Untere Scheibe (33)

## Patentansprüche

1. Fahrzeug zur Fortbewegung wenigstens eines Passagiers mittels menschlicher Körperkraft, mittels Motoren und/oder mittels außerhalb des Fahrzeugs aufgebrachter Kraft, umfassend
• wenigstens zwei mit einem Abstand voneinander angeordnete Räder (1),
• wenigstens zwei Achsen, die jeweils wenigstens einem der mit einem Abstand angeordneten Rädern (1) zugeordnet sind und auf denen die wenigstens zwei Räder (1) drehbar gelagert sind,
• eine Tragrahmenkonstruktion, welche die wenigstens zwei Räder (1) mittels der Achsen miteinander mechanisch verbindet und die im wesentlichen oberhalb oder seitlich des wenigstens einen Passagiers verläuft,
**DADURCH GEKENNZEICHNET,**
• **dass** die im wesentlichen oberhalb oder seitlich des wenigstens einen Passagiers verlaufende Tragrahmenkonstruktion alle auf sie wirkenden Kräfte in eine Richtung umleitet, welche die wenigstens zwei mit einem Abstand voneinander angeordneten Räder (1) voneinander zu entfernen versucht, wobei die Tragrahmenkonstruktion aus festen, im wesentlichen flexiblen und/oder zueinander drehbeweglichen Tragelementen besteht oder diese beinhaltet, und
• das wenigstens eine Spannverbindung (4) existiert, die im wesentlichen an den die Räder
(1) drehbar aufnehmenden Enden der Tragrahmenkonstruktion oder in der Mitte von wenigstens zwei parallelen Rädern (1) an der diese Räder verbindenden Achse bzw. Welle befestigt ist, und
• **dass** die wenigstens eine Spannverbindung (4) im wesentlichen unterhalb und/oder seitlich des wenigstens einen Passagiers verläuft, wobei die Spannverbindung (4) vorzugsweise zur Einstellung des Sitz- bzw. des Sattelposition unterstutzt, und
• **dass** die wenigstens eine Spannverbindung (4), die Kräfte übernimmt, die von der Tragrahmenkonstruktion in eine Richtung umgeleitet werden, welche die wenigstens zwei mit einem Abstand voneinander angeordneten Räder (1) voneinander zu entfernen versucht, wobei die Spannverbindung (4) vorzugsweise aus flexiblen, sich in seiner Länge im wesentlichen nicht dehnenden Material ausgebildet ist.

2. Fahrzeug nach Anspruch 1, **dadurch gekennzeichnet, dass** es mit einer einzigen Spannverbindung ausgerüstet ist, die unter anderem zur Abstimmung des Radstandes und/oder zur Änderung der Fahrtrichtung dient, wobei diese Spannverbindung vorzugsweise einen in die Fahrbahnebene projizierten geraden und mittigen, einen U-förmigen, einen V-förmigen oder einen kreisrunden Verlauf aufweist.

3. Fahrzeug zur Fortbewegung wenigstens eines Passagiers mittels menschlicher Körperkraft, mittels Motoren und/oder mittels außerhalb des Fahrzeugs aufgebrachter Kraft, umfassend
• wenigstens zwei mit einem Abstand voneinander angeordnete Räder (1),
• wenigstens zwei Achsen, die jeweils wenigstens einem der mit einem Abstand angeordneten Rädern (1) zugeordnet sind und auf denen die wenigstens zwei Räder (1) drehbar gelagert sind,
• eine Tragrahmenkonstruktion, welche die wenigstens zwei Räder (1) mittels der Achsen miteinander mechanisch verbindet und die im wesentlichen oberhalb oder seitlich des wenigstens einen Passagiers verläuft,
**DADURCH GEKENNZEICHNET,**
• **dass** die Tragrahmenkonstruktion im wesentlichen aus einer einzigen Tragstrebe (7) besteht, die den einem Abstand voneinander angeordneten Räder (1) zugeordnet ist, oder aus wenigstens zwei Tragstreben (7) besteht, die jeweils einem der wenigstens zwei mit einem Abstand voneinander angeordneten Räder (1) zugeordnet sind, und
• **dass** die Tragstrebe bzw. Tragstreben (7) im wesentlichen bogenförmig, im wesentlichen ohne abrupt Verlaufsänderung ausgebildet ist bzw. sind, und
• **dass** die Tragstrebe bzw. Tragstreben (7) ausgehend von jeweils einem der wenigstens zwei die Räder (1) drehbar lagernden Achsen nach im wesentlichen oberhalb oder seitlich des Passagiers verläuft bzw. verlaufen, und
• **dass** die wenigstens zwei Tragstreben sich im wesentlichen an einem Punkt vorzugsweise oberhalb, seitlich, oder auch unterhalb des wenigstens eines Passagiers treffen, und
• **dass** die wenigstens zwei Tragstreben (7) dort mechanisch in der Weise miteinander verbunden sind, dass sie um eine Achse (17a) gegeneinander oder gegenüber einer weiteren, dritten Tragstrebe drehbar sind.

4. Fahrzeug nach einem der Ansprüche 1 bis 3, wobei ein vorderer Zusammenbau wenigstens ein vorderes Rad (1) und wenigstens eine vordere Tragstrebe (13) umfasst und ein hinterer Zusammenbau wenigstens ein hinteres Rad (1) und wenigstens eine hintere Tragstrebe (14) umfasst, **dadurch gekennzeichnet, dass** die zwei Zusammenbauten um eine im wesentlichen vertikale Achse (17a) und/oder um eine im wesentlichen horizontale, in Fahrtrichtung angeordnete Achse (17b) und/oder um eine im wesentlichen horizontale, im wesentlichen senkrecht zur Fahrtrichtung angeordnete Achse relativ zueinander drehbar sind, wobei die im wesentlichen horizontale, im wesentlichen senkrecht zur Fahrtrichtung angeordnete Achse zur Verstellung des Radabstandes bzw, der Höhe des Fahrzeugs dient, um den Ein- und Ausstieg, die Straßenlage, eine Modulierung der Anzahl der Passagiere und/oder das Zusammenfalten des Fahrzeugs zu unterstutzen.

5. Fahrzeug, vorzugsweise nach einem der Ansprüche 1 bis 4, zur Fortbewegung wenigstens eines Passagiers mittels menschlicher Körperkraft, mittels Motoren und/oder mittels außerhalb des Fahrzeugs aufgebrachter Kraft, umfassend
• wenigstens zwei mit einem Abstand voneinander angeordnete Räder (1),
• wenigstens zwei Achsen, die jeweils wenigstens einem der mit einem Abstand angeordneten Rädern (1) zugeordnet sind und auf denen die wenigstens zwei Räder (1) drehbar gelagert sind,
• eine Tragrahmenkonstruktion, welche die wenigstens zwei Räder (1) mittels der Achsen miteinander mechanisch verbindet und die im wesentlichen oberhalb oder seitlich des wenigstens einen Passagiers verläuft,
**DADURCH GEKENNZEICHNET,**
• **dass** eine Fahrtrichtungsänderung des Fahrzeugs durch eine Schwerpunktverlagerung des wenigstens einen Passagiers erfolgt und
• **dass** die Tragrahmenkonstruktion auf zwei Achsen (19, 20) gelagert ist, die sich in einer vertikalen, in Fahrtrichtung verlaufenden Ebene erstrecken, wobei sich die gedachten Verlängerungen der zwei Achsen (19, 20) an einem Punkt unter dem Fahrzeug schneiden, so dass, bezogen auf eine quer zur Fahrtrichtung verlaufende, vertikale Ebene, die zwei Achsen (19, 20) vorzugsweise symmetrisch zueinander schräg angeordnet sind

6. Fahrzeug nach einem der Ansprüche 1 bis 5, **dadurch gekennzeichnet, dass** die Tragrahmenkonstruktion im wesentlichen aus zwei Tragstreben (7) besteht, die, bezogen auf eine vertikale, in Fahrtrichtung verlaufende Ebene, spiegelbildlich verlaufen, wobei die Enden der zwei Tragstreben (7) derart im wesentlichen unmittelbar zueinander angeordnet sind, dass die Projizierung der zwei Tragstreben (7) auf eine zur Fahrtrichtung quer stehende Ebene eine V-Form ausbildet, wobei die Enden der zwei Tragstreben (7) vorzugsweise im wesentlichen unmittelbar an den jeweiligen Achsen (3) bzw. Wellen (2) der Räder (1) angeordnet sind.

7. Fahrzeug, insbesondere nach einem der Ansprüche 1 bis 6, zur Fortbewegung wenigstens eines Passagiers mittels menschlicher Körperkraft, mittels Motoren und/oder mittels außerhalb des Fahrzeugs aufgebrachter Kraft, umfassend
• wenigstens zwei mit einem Abstand voneinander angeordnete Räder (1),
• wenigstens zwei Achsen, die jeweils wenigstens einem der mit einem Abstand angeordneten Rädern (1) zugeordnet sind und auf denen die wenigstens zwei Räder (1) drehbar gelagert sind,
• eine Tragrahmenkonstruktion, welche die wenigstens zwei Räder (1) mittels der Achsen miteinander mechanisch verbindet und die im wesentlichen oberhalb oder seitlich des wenigstens einen Passagiers verläuft,
**DADURCH GEKENNZEICHNET,**
**dass** für die Aufnahme des wenigstens einen Passagiers ein einen Sitz (8) oder Sattel tragendes Element (9), mit seinem oberen Ende mechanisch an einem oder mehreren im wesentlichen höchsten Punkten der Tragrahmenkonstruktion fest, gefedert und/oder gedämpft befestigt ist, wobei das den Sitz (8) bzw. den Sattel tragende Element (9) vorzugsweise die den Antrieb des Fahrzeugs unterstützenden Elemente und /oder eine Lenkvorrichtung (11) bzw. trägt.

8. Fahrzeug nach einem der Ansprüche 1 bis 7 **dadurch gekennzeichnet, dass** das den Sitz (8) bzw. den Sattel tragende Element (9) an der Tragrahmenkonstruktion um eine im wesentlichen horizontale, zur Fahrtrichtung quer stehende Achse und/oder um eine im wesentlichen vertikalen Achse drehbar gelagert ist, wobei die Positionierung des Sitzes (8) bzw. des Sattels relativ zu der Tragrahmenkonstruktion durch wenigstens eine Spannvorrichtung (5) oder Strebe unterstützt werden kann, wobei das den Sitz (8) bzw. den Sattel tragende Element (9) vorzugsweise als Drehachse dienen kann, um welche der vordere Zusammenbau und der hintere Zusammenbau zueinander um eine vertikale bzw. horizontale Achse drehbar gelagert sind, so dass das Herausnehmen des den Sitz (8) bzw. den Sattel tragenden Elementes (9) vorzugsweise die Trennung des vorderen Zusammenbaus von dem hinteren Zusammenbau zur Folge hat.

9. Fahrzeug nach einem der Ansprüche 1 bis 8, **dadurch gekennzeichnet, dass** das den Sitz (8) bzw. den Sattel tragende Element (9) mindestens teilweise aus flexiblen Spannverbindungen besteht.

10. Fahrzeug, insbesondere nach einem der Ansprüche 1 bis 9 **dadurch gekennzeichnet, dass** ein einen Sitz (8) oder Sattel tragendes Element (9) als Bestandteil der Tragrahmenkonstruktion oder einer Tragstrebe (7) im wesentlichen ohne abrupt Verlaufsänderung der Tragrahmenkonstruktion bzw. der Tragstrebe (7) und ohne Zusatzbauelemente ausgebildet ist, wobei das einen Sitz (8) oder Sattel tragendes Element (9) vorzugsweise als Bestandteil des hinteren Zusammenbaus bzw. der hinteren Strebe ausgebildet ist, so dass eine Einstellung des Abstands zwischen den hinteren und dem vorderen Zusammenbauten bzw. Tragstreben eine Einstellung des Abstands zwischen dem einen Sitz (8) oder Sattel tragenden Element (9) und einer am vorderen Zusammenbau angeordneten Antriebeinrichtung.

11. Fahrzeug, insbesondere nach einem der Ansprüche 1 bis 10, zur Fortbewegung wenigstens eines Passagiers mittels menschlicher Körperkraft, mittels Motoren und/oder mittels außerhalb des Fahrzeugs aufgebrachter Kraft, umfassend
• wenigstens zwei mit einem Abstand voneinander angeordnete Räder (1),
• wenigstens zwei Achsen, die jeweils wenigstens einem der mit einem Abstand angeordneten Rädern (1) zugeordnet sind und auf denen die wenigstens zwei Räder (1) drehbar gelagert sind,
• eine Tragrahmenkonstruktion, welche die wenigstens zwei Räder (1) mittels der Achsen miteinander mechanisch verbindet und die im wesentlichen oberhalb oder seitlich des wenigstens einen Passagiers verläuft,
**DADURCH GEKENNZEICHNET,**
• **dass** das Fahrzeug wenigstens eine, im wesentlichen unterhalb oder seitlich des wenigstens einen Passagiers verlaufende Spannverbindung aufweist, die zur Beeinflussung der Fahrtrichtung dient, wobei die wenigstens eine Spannverbindung vorzugsweise aus flexiblem, sich im wesentlichen nicht dehnendem Material besteht, und wobei die wenigstens eine zur Änderung der Fahrtrichtung dienende Spannverbindung direkt mit der Hand bzw. mit dem Fuß oder mittels einer Lenkvorrichtung (11) bzw. Hebels betätigt werden kann.

12. Fahrzeug nach einem der Ansprüche 1 bis 11, **dadurch gekennzeichnet, dass** eine einzige, mittig in Fahrtrichtung verlaufende Spannverbindung zur Fahrtrichtungsänderung dient, wobei die Änderung der Fahrtrichtung durch die Verschiebung wenigstens eines Endes der Spannverbindung in eine Richtung erfolgt, die im wesentlichen quer zur Fahrtrichtung verläuft und wobei diese Verschiebung vorzugsweise wenigstens einer der die zwei koaxialen Räder (1) verbindenden Achsen entlang stattfindet.

13. Fahrzeug nach einem der Ansprüche 1 bis 12, **dadurch gekennzeichnet, dass** es mit zwei symmetrisch zu der vertikalen, in Fahrtrichtung verlaufenden Ebene angeordneten Spanneverbindungen ausgerüstet ist, die zur Änderung der Fahrtrichtung dienen, wobei die Richtungsänderung durch das Ziehen wenigstens eines der zwei Spanneverbindungen erfolgt.

14. Fahrzeug nach einem der Ansprüche 1 bis 13, **dadurch gekennzeichnet, dass** es mit einer einzigen Spannverbindung ausgerüstet ist, die zur Änderung der Fahrtrichtung dient, wobei diese Spannverbindung einen U-förmigen, V-förmigen, halbkreisförmigen oder geschlossenen Verlauf aufweist.

15. Fahrzeug nach einem der Ansprüche 1 bis 14, **dadurch gekennzeichnet, dass** dieselbe Spannverbindung zur Übernahme der die Räder (1) voneinander entfernenden Kräfte und zur Richtungsänderung dient.

16. Fahrzeug, nach einem der Ansprüche 1 bis 15, **dadurch gekennzeichnet,**
• **dass** ein erster, sich unterhalb der Tragrahmenkonstruktion befindlicher Passagier, an der Fortbewegung bzw. Führung des Fahrzeugs durch seine Körperkraft wahlweise teilnimmt oder nicht teilnimmt,
• **dass** der Hauptfahrer sich oberhalb der Tragrahmenkonstruktion befindet.

17. Fahrzeug, das als Anhänger dient, und diesbezüglich von einer antreibenden Einrichtung bzw. einem anderen antreibenden Fahrzeug in Bewegung gebracht wird, umfassend
• ein einziges auf einer Achse gelagertes Rad (1) oder mehrere mit einem Abstand voneinander koaxial gelagerte Räder (1) zur Fortbewegung wenigstens eines Passagiers,
• eine Tragrahmenkonstruktion, welche das einzige Rad (1) bzw. die mehrere koaxial gelagerte Räder (1) mit der antreibenden Einrichtung bzw. mit dem antreibenden Fahrzeug mechanisch verbindet,
**DADURCH GEKENNZEICHNET, DASS**
• die Tragrahmenkonstruktion, mindestens in dem Bereich, wo sie an der antreibenden Einrichtung bzw. an dem anderen antreibenden Fahrzeug anschließt bzw. im Bereich des Ein-/Ausstieg des wenigstens einen Passagiers im wesentlichen oberhalb oder seitlich des wenigstens einen Passagiers verläuft, wobei die Tragrahmenkonstruktion aus einer Tragstrebe bzw. aus Tragstreben (7) besteht die vorzugsweise im wesentlichen bogenförmig, im wesentlichen ohne abrupt Verlaufsänderung ausgebildet ist bzw. sind.

18. Fahrzeug nach Anspruch 17, **dadurch gekennzeichnet, dass** die oberhalb des wenigstens einen Passagiers verlaufende Tragrahmenkonstruktion alle auf sie wirkenden Kräfte in eine Richtung umleitet, die das eine Rad (1) bzw. die mehrere koaxial gelagerten Räder (1) von der Verbindungsstelle des antreibenden Fahrzeugs zu entfernen versucht und eine, im wesentlichen in der Nähe der Verbindungsstelle zu dem antreibenden Fahrzeug und der Achse befestigte Spannverbindung diese Kräfte übernimmt.

19. Fahrzeug insbesondere nach einem der Ansprüche 1 bis 18, **dadurch gekennzeichnet,**
• **dass** das den Sitz (8) bzw. den Sattel tragende Element (9) im wesentlichen aus zwei einzelnen Rohren bzw. Stangen (9) besteht, und
• **dass** die zwei einzelnen Rohre bzw. Stangen jeweils an einer der Tragstrebe (7) der Tragrahmenkonstruktion angehängt werden, und
• **dass** die zwei einzelnen Rohre bzw. Stangen sich beim Zusammenfalten des Fahrzeuges mit den Tragstreben (7) der Tragrahmenkonstruktion in eine vertikale, in Fahrtrichtung zeigende, mittige Ebene drehen lassen, und
• **dass** ein über die zwei einzelnen Rohre bzw. Stangen spannbare Sitzbezug im Zusammengefalteten Zustand des Fahrzeugs vorzugsweise keine Spannung mehr aufweist, und
• **dass** die zwei einzelnen Rohre bzw. Stangen im zusammengefalteten Zustand des Fahrzeuges unmittelbar nebeneinander zu liegen kommen.

20. Fahrzeug nach einem der vorangegangenen Ansprüche, **dadurch gekennzeichnet, dass** es mit wenigstens einer, den Untergrund zwecks Fortbewegung berührenden Vorrichtung ausgestattet werden kann, welche für seine Fortbewegung auf Straßen, Schnee, Wasser, Sand, Luft oder auf einer Kombination davon geeignet sind, wobei die wenigstens eine den Untergrund zwecks Fortbewegung berührenden Vorrichtung gleichzeitig für mehrere Untergründe geeignet sein kann.

21. Fahrzeug nach einem der vorangegangenen Ansprüche wobei wenigstens ein Satz von zwei koaxialen gelagerten Rädern (1) vorgesehen ist, **dadurch gekennzeichnet, dass** der laterale Abstand zwischen den zwei koaxialen Rädern (1) wenigstens eines Satzes verstellbar ist, um hierdurch das Zusammenfalten des Fahrzeugs zu unterstützen, bzw. der Einstellung der Fahrzeugsbreite und/oder der Anzahl der Passagiere anzupassen, wobei die Verstellung dieses lateralen Abstands vorzugsweise durch die relative Bewegung bzw. den Ausbau der Teile, aus denen die Achse besteht, welche zwei im wesentlichen koaxiale Räder (1) zusammen verbindet, und/oder durch die relative Bewegung der jeweiligen Tragstreben, die jeweils ein Rad zugeordnet ist, erfolgen kann.

22. Fahrzeug, nach einem der vorangegangenen Ansprüche, **dadurch gekennzeichnet, dass** die Tragrahmenkonstruktion mit einer mittigen Öffnung versehen ist, welche ein ausreichendes Sichtfeld für den wenigstens einen Passagier gewährleistet, wobei die Öffnung für das Sichtfeld des Passagiers vorzugsweise durch eine geschickte Gestaltung des Verlaufs der jeweiligen Tragstreben der Tragrohrkonstruktion im Wesentlichen ohne den Einsatz zusätzlicher Tragelementen entsteht.

23. Fahrzeug nach einem der vorangegangenen Ansprüche, **dadurch gekennzeichnet, dass** es eine, vorzugsweise drehbare, Aufnahme für einen Behinderten-Rollstuhl aufweist, wobei der Rollstuhl, vorzugsweise von der hinteren Seite des Fahrzeugs, wenigstens teilweise aufgebockt werden kann.

24. Fahrzeug nach einem der vorangegangenen Ansprüche, **dadurch gekennzeichnet, dass** es im Wesentlichen durch einfache Montageoperationen, ohne Werkzeuge, und ohne Verschweißen von dem Verbraucher zusammengebaut, gefaltet, entfaltet oder zerlegt werden kann.

25. Fahrzeug nach einem der vorangegangenen Ansprüche, **dadurch gekennzeichnet, dass** das Fahrzeug oder ein Teil davon als ein Zelt benutzt werden kann, wobei seine Tragrahmenkonstruktion zum Tragen des Zeltstoffes dient.

26. Fahrzeug nach einem der vorangegangenen Ansprüche, **dadurch gekennzeichnet, dass** es als ein Spielzeug in verkleinertem Maßstab Verwendung findet.
